(19) **Europäisches Patentamt**
**European Patent Office**
**Office européen des brevets**

(11) Veröffentlichungsnummer: **0 311 858 B1**

(12) **EUROPÄISCHE PATENTSCHRIFT**

(45) Veröffentlichungstag der Patentschrift:
26.06.91 Patentblatt 91/26

(51) Int. Cl.⁵: **B23Q 11/08**, F16P 1/00

(21) Anmeldenummer: **88116199.6**

(22) Anmeldetag: **30.09.88**

(54) **Schutzverkleidung für eine Werkzeugmaschine mit einer Beschickungstür.**

(30) Priorität: **14.10.87 DE 3734719**

(43) Veröffentlichungstag der Anmeldung:
**19.04.89 Patentblatt 89/16**

(45) Bekanntmachung des Hinweises auf die
Patenterteilung:
**26.06.91 Patentblatt 91/26**

(84) Benannte Vertragsstaaten:
**CH DE ES FR GB IT LI SE**

(56) Entgegenhaltungen:
**DE-A- 3 320 738**
**DE-U- 8 535 836**
**US-A- 2 542 419**
**SOVIET INVENTIONS ILLUSTRATED Woche**
**C16, 28. Mai 1980, Seiten 54,56, Zusammenfas-**
**sung Nr. D5727, Derwent Publications Ltd.,**
**Sektion Mechanik; & SU-A-679 327 (VEKHOV**
**AI) 18-08-1979**

(73) Patentinhaber: **Chiron-Werke GmbH & Co. KG**
**Talstrasse 33**
**W-7200 Tuttlingen (DE)**

(72) Erfinder: **Winkler, Hans-Henning, Dr.**
**Brunnentalstrasse 88**
**W-7200 Tuttlingen (DE)**
Erfinder: **Rütschle, Eugen**
**Schönenbergstrasse 20**
**W-7202 Mühlheim (DE)**

(74) Vertreter: **Witte, Alexander, Dr.-Ing.**
**Witte, Weller & Hilgenfeldt Patent- und**
**Rechtsanwälte Augustenstrasse 7**
**W-7000 Stuttgart 1 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Schutzverkleidung für eine Werkzeugmaschine, bei der Werkstücke auf einem Werkstücktisch aufspannbar sind, mit einer zwischen zwei Endlagen verschwenkbaren Beschickungstür, die in einer ersten Endlage die Schutzverkleidung abschließt und in einer zweiten Endlage eine Öffnung in der Schutzverkleidung zum Zugriff auf das Werkstück freigibt, wobei die Unterkante der Beschickungstür während der Bewegung eine nach oben gewölbte Ortskurve über das Werkstück hinweg beschreibt.

Bei einer derartigen, aus der DE-A-33 20 738 bekannten Schutzverkleidung wird die verschwenkbare Beschickungstür, beispielsweise beim Öffnen, d.h. bei Bewegen von der ersten Endlage in die zweite Endlage, von der Bedienungsperson zunächst auf sich zu gezogen. Bei dieser Bewegung wird die Beschickungstür über ein Lenkermechanismus gleichzeitig angehoben und wird im anschließenden weiteren Bewegungsablauf in die Werkzeugmaschine hineinbewegt und dabei zum Teil hinter das Werkstück wieder abgesenkt. Wird der zuvor beschriebene Bewegungsablauf nach einem Bearbeitungsvorgang am Werkstück durchgeführt, befinden sich an der Innenseite und insbesondere an der Unterseite der Beschickungstür Flüssigkeitstropfen des Schmiermittels bzw. Bohrwassers des zuvor abgelaufenen Bearbeitungsvorganges.

Durch die hohe Oberflächenspannung der Flüssigkeitstropfen bleiben diese insbesondere an der Unterkante der Beschickungstür hängen, so daß beim Öffnen der Beschickungstür über ihre gesamte Breite eine Tropfenreihe hängt.

Wird die Beschickungstür rasch geöffnet, so erfährt diese und die an ihr haftenden Tropfen eine merkliche Beschleunigung auf die Bedienungsperson zu. Die auf die Bedienungsperson zugerichtete Bewegung wird während des Öffnungsvorganges abgebremst und in eine in das Innere der Werkzeugmaschine gerichtete Bewegung umgekehrt. Bei der Umkehr, d.h. bei dem Abbremsen der Beschickungstür, lösen sich die an der Unterkante haftenden Flüssigkeitstropfen ab und ihre kinetische Energie ist ausreichend, um bis auf die Bedienungsperson zugeschleudert zu werden. Daraus resultiert, daß die Bedienungsperson bzw. deren Arbeitskleidung bei einem raschen Öffnungsvorgang stark verschmutzt wird. Bedenkt man, daß zahlreiche Bearbeitungsvorgänge während eines Arbeitstages hintereinander an einer derartigen Werkzeugmaschine durchgeführt werden, so resultiert daraus eine erhebliche Beeinträchtigung der Bedienungsperson.

Weiterhin nachteilig an einer Schutzverkleidung der eingangs genannten Art ist, daß beim Öffnungsvorgang bzw. entsprechend beim Verschließvorgang die Beschickungstür zeitweilig aus dem Umriß der Schutzverkleidung herausragt. Stützt sich die Bedienungsperson beispielsweise bei einem derartigen Verschwenkvorgang, bei der sie mit einer Hand die Beschickungstür ergriffen hat, mit der anderen Hand an der Schutzverkleidung ab, so kann es bei einer Unachtsamkeit möglich sein, daß die Hand zwischen Schutzverkleidung und Beschickungstür beim Öffnungs- bzw. Verschließvorgang eingeklemmt wird.

Aufgabe der vorliegenden Erfindung ist daher, eine Schutzverkleidung der eingangs genannten Art derart zu verbessern, daß eine saubere und sichere Handhabung der Beschickungstür ermöglicht ist.

Erfindungsgemäß wird diese Aufgabe dadurch gelost, daß die Beschickungstür der eingangs genannten Schutzverkleidung an der Innenseite eine Vorrichtung zum Ableiten von an der Innenseite abfließender Flüssigkeit zu den seitlichen Ecken aufweist, und daß die Beschickungstür während der Bewegung die Außenkontur der Schutzverkleidung nicht überragt. Durch Vorsehen der Ableitvorrichtung ist es nicht mehr möglich, daß über die gesamte Länge der Unterkante Flüssigkeitstropfen hängen. Dadurch, daß die über die gesamte Breite der Innenseite der Beschickungstür anfallende Flüssigkeit zu den Ecken abgeführt wird, läuft in diesen ein relativ großer Flüssigkeitsstrom ab, der zu einer nahezu rückstandslosen Abfuhr der Flüssigkeit führt. Es ist dann allenfalls noch möglich, daß in den beiden äußeren Eckpunkten am Ablauf der Vorrichtung jeweils ein Tropfen hängt. Da solche Türen gebräuchlicherweise jedoch wesentlich breiter als die Breite eines menschlichen Körpers sind, würde ein Wegschleudern dieser eckseitigen Tropfen nicht mehr zu einer Beeinträchtigung der Bedienungsperson führen. Dadurch, daß die Beschickungstür während der Bewegung die Außenkontur der Schutzverkleidung nicht überragt, laufen die unteren Ecken der Beschickungstür während des Verschwenkvorganges in der Schutzverkleidung, so daß die Ecken überhaupt nicht mehr frei zum Liegen kommen. Dadurch ist die Gefahr des Abschleuderns auch der Restflüssigkeitsmenge in diesem Bereich nahezu vollständig ausgeschlossen. Außerdem ist dadurch, daß die Beschickungstür während der Bewegung die Außenkontur der Schutzverkleidung nicht überragt, gleichzeitig auch sichergestellt, daß keine Körperteile oder Teile der Bekleidung der Bedienungsperson zwischen die sich bewegende Beschickungstür und die ortsfeste Schutzverkleidung eingeklemmt werden können.

Die Aufgabe wird somit durch die in Anspruch 1 vorgeschlagenen Merkmale vollständig gelöst.

In einer besonders vorteilhaften Ausgestaltung weist die Vorrichtung eine dachförmige Rinne auf, deren äußeren Enden in den Ecken der Beschickungstür in einem Abfluß enden. Dies hat den Vorteil, daß eine konstruktiv äußerst einfache und ungestörte Sammlung und Abführung der an der Innenseite abtropfenden Flüssigkeit möglich ist.

Zweckmäßigerweise ist dazu die dachförmige Rinne im Bereich der Unterkante angeordnet. Dies hat den Vorteil, daß die über den oberen Bereich der Innenseite abfließende Flüssigkeit sich bereits zu einem relativ dichten Flüssigkeitsfilm verdichten kann, der dann rasch und vollständig über die Rinne abgeführt wird.

Gemäß einer weiteren bevorzugten Ausgestaltung sind die eckenseitigen Abschlüsse von der Innenseite weg gerichtet. Dies hat den Vorteil, daß die abgeführte Flüssigkeit in eine Richtung gelenkt wird, die von der Innenseite der Beschickungstür in Richtung Innenraum der Schutzverkleidung gerichtet ist, so daß dadurch ein besonders gutes Ablösen von der Innenseite ermöglicht ist.

Die Erfindung wird anhand eines ausgewählten Ausführungsbeispiels näher beschrieben und erläutert. Es zeigen :

Fig. 1 schematisch eine perspektivische Ansicht einer erfindungsgemäßen Schutzverkleidung ;

Fig. 2 teilweise einen Schnitt längs der Linie II-II in Fig. 1 ; und

Fig. 3 ausschnittsweise eine Ansicht der erfindungsgemäßen Schutzverkleidung vom Innenraum einer Werkzeugmaschine aus gesehen.

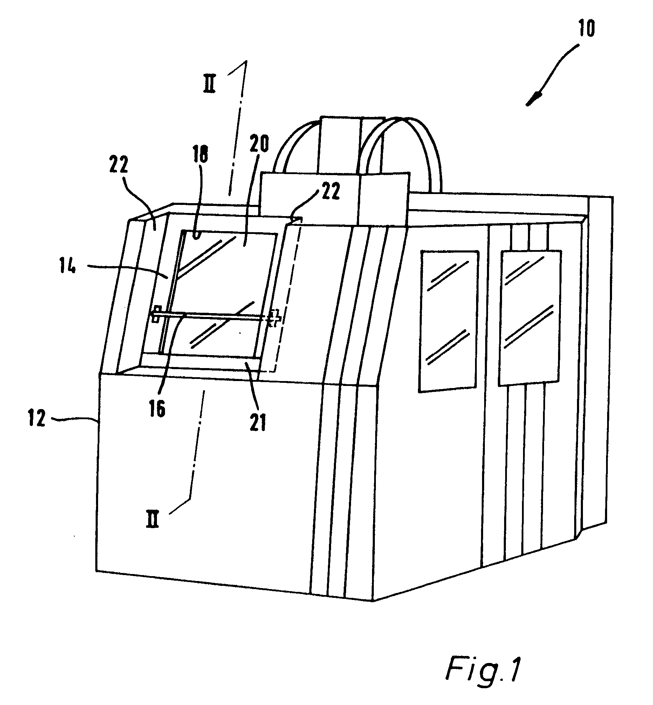

Eine in Fig 1 bis 3 gezeigte Werkzeugmaschine 10 ist mit einer Schutzverkleidung 12 versehen.

Die Schutzverkleidung 12 ist mit einer Beschickungstür 14 versehen, die an ihrer Außenseite 15 mit einer quer verlaufenden Stange 16 versehen ist, die als Handhabe für die Beschickungstür 14 dient.

Die Beschickungstür 14 weist einen Rahmen 18 auf, in dem eine Scheibe 20 aufgenommen ist, durch die von außen in den Innenraum der von der Schutzverkleidung 12 umgebenen Werkzeugmaschine 10 geblickt werden kann.

Die Beschickungstür 14 ist dabei in einer Nische 21 in der Schutzverkleidung 12 aufgenommen, so daß beidseitig der vertikalen Rahmenkante des Rahmens 18 Verkleidungsteile 22 der Schutzverkleidung 12 vorspringen.

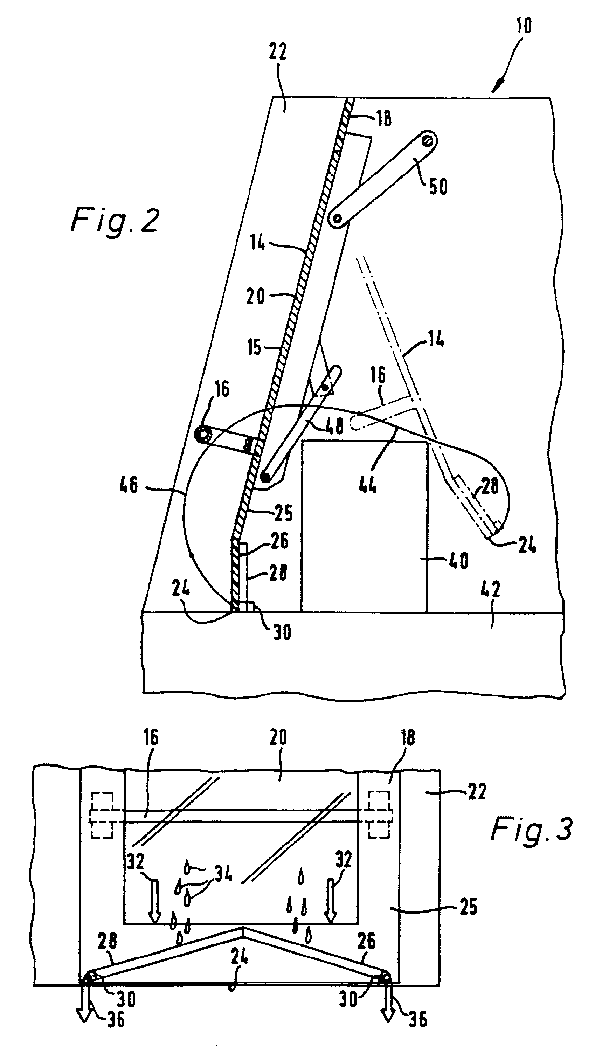

Die Beschickungstür 4 ist dabei, wie aus Fig. 2 zu entnehmen, über Lenker 48, 50 eines hier nicht näher dargestellten Verschwenkmechanismus verbunden, der dazu führt, daß, falls die Beschickungstür 14 aus der in Fig. 2 mit der durchgezogenen Linie angedeuteten, ersten Endlage, in der sie die Schutzverkleidung 12 abschließt, in ihre zweite Endlage, wie dies durch die strichpunktierte Linien angedeutet ist, verschwenkt wird, beispielsweise die Unterkante 24 eine gewölbte Ortskurve 44 durchläuft.

Dadurch ist es möglich, daß sich die Beschickungstür 14 beim Öffnen bzw. Verschließen über ein auf einem Werkstücktisch 42 der Werkzeugmaschine 10 befindliches Werkstück 40 bewegt, ohne dieses zu berühren bzw. dessen Stellung zu verändern.

Wie aus Fig. 2 und 3 zu entnehmen, ist an der Innenseite 25 der Beschickungstür 14 im Bereich der Unterseite 24 und unterhalb der Scheibe 20 eine Flüssigkeitssammelvorrichtung 26 vorgesehen, die die Form einer dachförmigen Rinne 28 aufweist. Der "First" der Rinne 28 liegt dabei etwa mittig und knapp unterhalb der Unterkante der Scheibe 20.

Die Rinne 28 endet im Bereich der unteren Ecken der Beschickungstür 14 in Abflüssen 30, die, wie aus Fig. 2 zu entnehmen, in den Innenraum der Werkzeugmaschine 10 gerichtet sind.

Das während eines Bearbeitungsvorganges an die Innenseite 25 der Beschickungstür 14 gespritzte Schmiermittel bzw. Bohrwasser läuft als Tropfen 34 aufgrund der Schwerkraft in Richtung der bodenseitig angeordnete Rinne 28, wie dies durch die Pfeile 32 (Fig. 3) angedeutet ist, ab. In der Rinne 28 werden die Tropfen gesammelt und über die seitlichen Abflüsse 30, wie dies durch Pfeile 36 angedeutet ist, abgeführt, wobei diese Richtung von der Innenseite 25 der Beschickungstür weg gerichtet ist. Die Rinne selbst kann im Querschnitt ein halbrundes, v-förmiges oder rechteckiges Profil aufweisen und je nach Ausführung der Beschickungstür 14 auf verschiedene Art und Weise an dieser befestigt werden. Besteht die Beschickungstür 14 beispielsweise aus Metall, so kann die Rinne an die Innenseite direkt angenietet oder angeschweißt werden. Besteht die Beschickungstür 14 aus Kunststoffmaterial, so kann die Rinne direkt bei dem Herstellvorgang an die Innenseite angeformt werden.

Wie insbesondere aus Fig. 2 zu entnehmen, führt die Unterseite 24 der Beschickungstür 14, falls eine Bedienungsperson an der Stange 16 zieht, eine von der Innenseite der Werkzeugmaschine weg und nach oben gerichtete Bewegung längs der gewölbten Ortskurve 44 durch, die nach Durchschreiten des Übergangsbereichs 46 in eine nach innen gerichtete Bewegung umgekehrt wird. Dadurch, daß die Beschickungstür 14 in einer Nische 21 (siehe Fig. 1) der Schutzverkleidung 12 aufgenommen ist, d.h., daß also beidseitig Verkleidungsteile 22 vorspringen, tritt die Beschickungstür 14 nicht über die Außenkontur, auf der der Bedienungsperson zugewandten Seite der Schutzverkleidung 12 vor, so daß nicht die Möglichkeit besteht, daß durch Unachtsamkeit Körperteile oder Bekleidungsteile zwischen die Beschickungstür 14 und das verbleibende Gehäuse der Schutzverkleidung 12 geklemmt werden. Die in horizontaler Richtung vorspringenden Verkleidungsteile 22 sind dabei selbstverständlich so bemessen, daß der übergangsbereich 46 der gewölbten Ortskurve auf jeden Fall innerhalb deren vertikal verlaufenden Längskanten verläuft.

Die äußeren unteren Ecken der Beschickungstür 14, die mit den Abflüssen 30 versehen sind, laufen bei der Bewegung der Beschickungstür 14 längs der Ortskurve 44 in unmittelbar Nähe der Verkleidungsteile 22, so daß auch ein Abbremsen der auf die Bedienungsperson zu gerichteten Bewegung im Übergangsbereich 46 kein Loslösen von im Eckenbereich haftender Flüssigkeit verursacht, da die zwischen Verkleidungsteile 22 und Beschickungstür evtl. mitlaufende bzw. mitgezogene Flüssigkeit aufgrund der Oberflächenspannung dort haftet.

**Ansprüche**

1. Schutzverkleidung für eine Werkzeugmaschine (10), bei der Werkstucke (40) auf einem Werkstucktisch (42) aufspannbar sind, mit einer zwischen zwei Endlagen verschwenkbaren Beschickungstür (14), die in einer ersten Endlage die Schutzverkleidung (12) abschließt und in einer zweiten Endlage eine Öffnung in der Schutzverkleidung (12) zum Zugriff auf das Werkstück (40) freigibt, wobei die Unterkante (24) der Beschickungstür (14) während der Bewegung eine nach oben gewölbte Ortskurve (44) über das Werkstück (40) hinweg beschreibt, dadurch gekennzeichnet, daß die Beschickungstür (14) an der Innenseite (25) eine Vorrichtung (26) zum Ableiten von an der Innenseite (25) abfließender Flüssigkeit (34) zu den seitlichen Ecken aufweist, und daß die Beschickungstür (14) während der Bewegung die Außenkontur der Schutzverkleidung (12) nicht überragt.

2. Schutzverkleidung nach Anspruch 1, dadurch gekennzeichnet, daß die Vorrichtung (26) eine dachförmige Rinne (28) aufweist, deren äußere Enden in den Ecken der Beschickungstür (14) in einem Abfluß (30) enden.

3. Schutzverkleidung nach Anspruch 2, dadurch gekennzeichnet, daß die dachförmige Rinne (38) im Bereich der Unterkante (24) der Beschickungstür (14) angeordnet ist.

4. Schutzverkleidung nach Anspruch 2 oder einem der folgenden, dadurch gekennzeichnet, daß die eckenseitigen Abflüsse (30) von der Innenseite (25) weg gerichtet sind.

**Claims**

1. Protecting case for a machine tool (10) where workpieces (40) can be mounted on a worktable (42), comprising a feed door (14) which can be pivoted between two end positions and which in a first end position closes the protecting case (12) while in the second end position it clears an opening in the protecting case (12) providing access to the workpiece (40), the bottom edge (24) of the feed door (14) describing during this movement an upwardly curved locus extending above and across the workpiece (40), characterized in that the feed door (14) is provided on its inside (25) with a device (26) for diverting liquid (34) flowing down the inside (25) towards the lateral corners and that the feed door (14) does not project beyond the outer contour of the protecting case (12) during its movement.

2. The protecting case of claim 1, characterized in that the device (26) comprises a roof-shaped channel (28) whose outer ends end in a discharge (30) at the corners of the feed door (14).

3. The protecting case of claim 2, characterized in that the roof-shaped channel (38) is arranged in the vicinity of the lower edge (24) of the feed door (14).

4. The protecting case of claim 2 or any of the subsequent claims, characterized in that the corner discharges (30) are directed away from the inside (25).

**Revendications**

1. Habillage de protection pour une machine-outil (10), dans laquelle des pièces à usiner sont susceptibles d'être fixées sur une table à pièces (42), avec une porte de chargement (14), pouvant pivoter entre deux positions finales, qui, dans une première position finale, ferme l'habillage de protection (12) et, dans une deuxième position finale, libère dans l'habillage de protection (12) une ouverture permettant l'accès à la pièce à usiner (40), le bord inférieur (24) de la porte de chargement (14) décrivant pendant le mouvement une courbe de transfert (44) au-dessus de la pièce à usiner (40), caractérisé en ce que la porte de chargement (14) présente en face intérieure (25) un dispositif (26) pour évacuer vers les angles latéraux le liquide (34) qui s'écoule sur la face intérieure (25) et la porte de chargement (14) ne sortant pas du contour extérieur de l'habillage de protection (12) pendant le mouvement.

2. Habillage de protection selon la revendication 1, caractérisé en ce que le dispositif (26) présente une goulotte en forme de toit (28), dont les extrémités extérieures s'achèvent dans les angles de la porte de chargement (14) en formant une évacuation (30).

3. Habillage de protection selon la revendication 2, caractérisé en ce que la goulotte en forme de toit (28) est disposée dans la zone du bord inférieur (24) de la porte de chargement (14).

4. Habillage de protection selon la revendication 2 ou l'une des revendications suivantes, caractérisé en ce que les évacuations (30) situées aux angles sont orientées en s'éloignant de la face intérieure (25).

Fig.1

Fig. 2

Fig. 3